# EUROPÄISCHE PATENTSCHRIFT

(11) **EP 0 719 900 B1**
(45) Veröffentlichungstag und Bekanntmachung des Hinweises auf die Patenterteilung: **05.04.2000**
(21) Anmeldenummer: 95119187.3
(22) Anmeldetag: 06.12.1995
(51) Int. Cl.: E05D 5/14, F16C 11/04, F16C 17/10

(54) **Gleitlagerung**
Slide bearing
Palier à glissement

(30) Priorität: 29.12.1994 DE 4447046
(43) Veröffentlichungstag der Anmeldung: 03.07.1996
(73) Patentinhaber: KS Gleitlager GmbH, 68789 St. Leon-Rot (DE)
(72) Erfinder: Bickle, Wolfgang, D-68799 Reilingen (DE); Müller, Manfred, D-74257 Untereisesheim (DE); Storch, Thomas, D-68782 Brühl (DE); Rubel, Herbert, D-74889 Sinsheim-Weiler (DE)
(74) Vertreter: Dreiss, Fuhlendorf, Steimle & Becker, Patentanwälte

(56) Entgegenhaltungen:
- DE-A- 2 159 801
- DE-A- 4 032 929
- DE-C- 3 243 831
- GB-A- 2 187 803
- US-A- 3 269 785
- US-A- 4 845 817

## Beschreibung

Die Erfindung betrifft eine Gleitlagerung für zwei sich berührende, durch einen Bolzen verbundene Elementteile eines ebenen Drehgelenks für Türen und Klappen, vorzugsweise an Kraftfahrzeugen, bestehend aus einem in die Bohrung eines Elementteils mit Preßpassung eingespannten wartungsfreien Gleitwerkstoff in Form zweier Bundbuchsen, die von beiden Seiten der Bohnung her in dieser angeordnet sind. Eine solche Gleitlagerung ist bekannt aus DE-A-2159801.

Die Gleitlagerung für zwei sich berührende, durch einen Bolzen verbundene Elementteile eines ebenen Drehgelenks für Türen und Klappen, insbesondere an Kraftfahrzeugen, besteht im allgemeinen aus einer gerollten, aus einem Bandabschnitt (Platine) eines Gleitwerkstoffs hergestellten Buchse mit beidseitig angeformtem Bund und über die ganze Breite gehender, im eingepreßten Zustand geschlossener Stoßfuge, die sich im Bereich der Bunde zu einem V-förmigen Schlitz erweitert.

Bekannt ist auch eine Scharnierverbindung, bei der die Scharnieraugen der einen oder anderen Scharnierhälfte mit einer Buchse, in die der Scharnierbolzen mit Laufsitz eingepreßt ist, ausgekleidet sind (DE-A-1 931 749, DE-A-1 784 004). In der DE-A-2 159 801 ist ein eingliedriges Scharnier für Türen und Klappen von Öffnungen an Kraftfahrzeugen beschrieben, bei dem in das Scharnierauge der mittleren beweglichen Scharnierhälfte eine Bundlagerbuchse mit Stoßfuge eingepreßt ist und die von der anderen Scharnierhälfte unter Einfügung des Scharnierbolzens mit Festsitz gabelartig umfaßt ist. Dabei soll auch die Möglichkeit einer geschlossenen Stoßfuge im Bereich des Bundes der Bundbuchse gegeben sein, was nach der derzeitigen Erfahrung aus fertigungstechnischen Gründen nicht möglich ist.

Der Nachteil derartig ausgebildeter Gleitlagerungen besteht darin, daß sich beim Auftragen einer Lackschicht auf die Elementteile des Drehgelenks im Bereich des V-förmigen Schlitzes bzw. der Stoßfuge des Bundes der in den Bohrungen eingespannten Bundbuchse Lackteile festsetzen, die bei der Bewegung des Drehgelenks infolge der Reibung des Bolzenkopfs der Bolzenverbindung abgerieben werden. Diese Abriebpartikel fallen dann beispielsweise auf den Boden des Kraftfahrzeugs und werden durch die nachfolgend aufgetragene Lackschicht eingeschlossen. Dadurch wird nicht nur die optische Wirkung der Lackierung beeinträchtigt, sondern es entstehen Ansatzpunkte für Korrosionserscheinungen. Um das zu vermeiden, sind vergleichsweise umfangreiche Nacharbeiten erforderlich.

Ein weiterer Nachteil der Bundbuchsen mit axial verlaufender Stoßfuge ist die enge Abhängigkeit des erreichbaren Bunddurchmessers vom Durchmesser der Buchse. Es ist nur etwa das 1,4-fache des Buchsendurchmessers als Bunddurchmesser herstellbar. Hierdurch ist die Aufnahme von Axialkräften erheblich eingeschränkt.

US-A-3,269,785 offenbart die Herstellung von Bundlagerhalbschalen durch Stanzen und Tiefziehen eines obenon Lagermetallstreifens. Die auf diese Weise erhaltene Topfform wird zur Bildung der Bundlagerhalbschalen getrennt.

Es ist die Aufgabe der vorliegenden Erfindung, die eingangs angeführte Gleitlagerung so auszubilden, daß der Abrieb von Lackpartikeln durch den Bolzenkopf der Bolzenverbindung im Bereich des Bundes der Bundbuchse vermieden wird.

Diese Aufgabe wird durch eine Gleitlagerung mit dem Merkmalen des Anspruchs 1 gelöst.

Da eine solche Bundbuchse keine Stoßfugen bzw. Schlitze im Bund aufweist, können sich zwischen dem Bolzenkopf der Bolzenverbindung und des Bundes keine Lackteile festsetzen, so daß kein Lackabrieb anfällt.

Im Rahmen der weiteren Ausgestaltung der erfindungsgemäßen Gleitlagerung ist im Übergangsbereich vom Bund zur Buchse der Bundbuchse eine Anfasung mit einem Winkel von 20 bis 45' oder eine im Querschnitt kreissegmentförmige Einsenkung vorgesehen, in die beim Einpressen der Bundbuchse in die Bohrung der Elementteile der durch den Verformungsvorgang bzw. die Kalibrierung verdrängte Gleitwerkstoff hineinfließen kann, so daß die Wanddicke des Bundes der Bundbuchse unverändert bleibt.

Mit der Erfindung wird eine spielfreie Lagerung zwischen den Bundbuchsen und dem darin gelagerten Bolzen über die gesamte Lebensdauer erreicht. Ebenso ist es durch die erfindungsgemäße Ausgestaltung der Gleitlagerung möglich, unabhängig von der zylindrischen Lagerbohrung eine vergrößerte Bundfläche zur sicheren Aufnahme von Axialkräften herzustellen.

Die Erfindung ist in der Zeichnung beispielhaft dargestellt und wird nachfolgend erläutert.

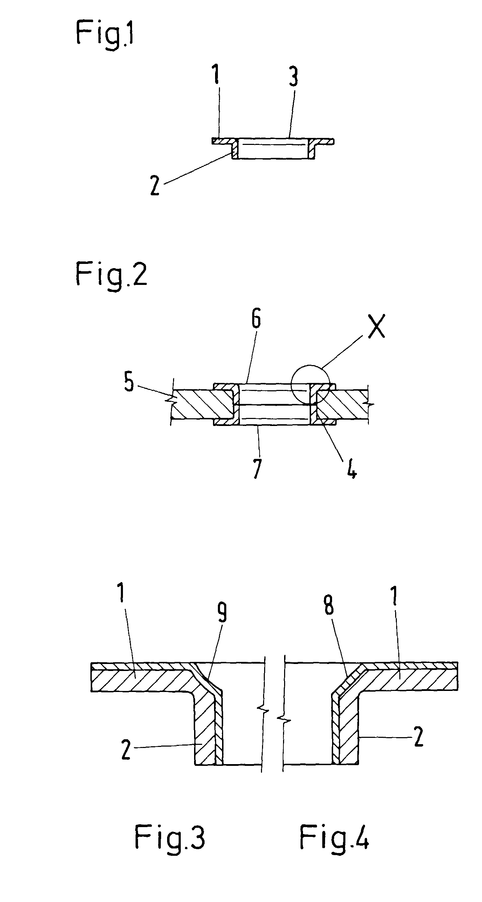

Fig. 1 zeigt eine aus einer kreisringförmigen Ronde durch Tiefziehen hergestellte, aus dem Bund (1) und der Buchse (2) bestehende Bundbuchse (3).

In Fig. 2 ist in die Bohrung (4) eines Elementteils (5) eines nicht dargestellten Drehgelenks von beiden Seiten her jeweils eine Bundbuchse (6, 7) mit Preßsitz eingespannt. Beim Einpressen der Bundbuchsen (6, 7) wird der vorhandene Gleitwerkstoffüberschuß in dem Bereich der Buchse (2) durch axiales Stauchen so verändert, daß die Bundinnenflächen der beiden Bundbuchsen (6, 7) fest an der Oberfläche der Bohrung (4) anliegen. Um sicherzustellen, daß die axiale Verformung der Buchse (2) die gewünschte Richtung erhält, ist, wie die Detaildarstellungen (X) von Fig. 2 in Fig. 3 und Fig. 4 zeigen, im Übergangsbereich von der Buchse (2) zum Bund (1) eine Anfasung (8) bzw. eine im Querschnitt kreissegmentförmige Einsenkung (9) angebracht. Diese Einsenkungen (9) bzw. Anfasungen (8) verhindern das Zurückfließen des Gleitwerkstoffüberschusses in dem Bereich des Bundes (1).

## Patentansprüche

1. Gleitlagerung für zwei sich berührende, durch einen Bolzen verbundene Elementteile (5) eines ebenen Drehgelenks für Türen und Klappen, vorzugsweise an Kraftfahrzeugen, bestehend aus einem in einer Bohrung (4) eines Elementteils mit Preßpassung eingespannten wartungsfreien Gleitlagerwerkstoff in Form zweier Bundbuchsen, die von beiden Seiten der Bohrung (4) her in diese eingepresst sind,
dadurch gekennzeichnet,
dass die beiden Bundbuchsen (6, 7) durch Tiefziehen je einer kreisringförmigen Ronde hergestellt sind, und mit ihren bundfreien Stirnseiten in der Bohrung (4) dicht aneinander anliegen, indem die Bundbuchsen durch axiales Stauchen gegeneinander in die Bohrung eingepresst sind, so dass durch den im hierdurch erzeugten Verformungsvorgang verdrängten Gleitwerkstoff ein spielfreier Preßsitz der Bundbuchsen (6, 7) in der Bohrung (4) und eine spielfreie Lagerung zwischen den Bundbuchsen und dem darin gelagerten Bolzen erreichbar ist.

2. Gleitlagerung nach Anspruch 1, dadurch gekennzeichnet, daß im Übergangsbereich von der Buchse (2) zum Bund (1) eine Anfasung (8) mit einem Winkel von 20 bis 45° angebracht ist.

3. Gleitlagerung nach Anspruch 1, dadurch gekennzeichnet, daß im Übergangsbereich von der Buchse (2) zum Bund (1) eine im Querschnitt kreissegmentförmige Einsenkung (9) angebracht ist.

## Revendications

1. Palier lisse pour deux éléments (5), en contact et reliés par un axe, d'une articulation à charnière plane pour portes et hayons, de préférence sur des véhicules automobiles, composé d'un matériau pour palier lisse sans maintenance, encastré en ajustement serré dans un alésage (4) d'un élément, ledit matériau pour palier lisse se présentant sous la forme de deux douilles à collet emmanchées à force dans l'alésage (4) de part et d'autre dudit alésage,
caractérisé en ce que les deux douilles à collet (6, 7) sont fabriquées par emboutissage profond selon un flan circulaire et sont jointives, par leur faces frontales sans collet, à l'intérieur de l'alésage (4), grâce au fait que les douilles à collet sont encastrées dans l'alésage par refoulement axial l'une contre l'autre, de sorte que le matériau pour palier lisse refoulé lors du processus de déformation qui en résulte permet d'obtenir un ajustement serré sans jeu des douilles à collet (6, 7) dans l'alésage (4) et un logement exempt de jeu de l'axe logé à l'intérieur des douilles à collet.

2. Palier lisse selon la revendication 1, caractérisé en ce que dans la zone de transition entre la douille (2) et le collet (1) est pratiqué un chanfrein (8) avec un angle de 20 à 45°.

3. Palier lisse selon la revendication 1, caractérisé en ce que dans la zone de transition entre la douille (2) et le collet (1) est pratiquée un congé (9) de section en segment de cercle.

## Claims

1. Plain bearing for two components (5), which touch one another and are connected by a bolt, of a planar hinge joint for doors and flaps, preferably on motor vehicles, consisting of a maintenance-free plain bearing material which is gripped in a bore (4) of a component with a press fit and takes the form of two flange bushings which are pressed into the bore (4) from both sides thereof, characterised in that the two flange bushings (6, 7) are each produced by deep drawing of an annular disc and rest closely against one another with their flange-free end faces in the bore (4), the flange bushings being pressed into the bore by axial compression against one another, so that due to the anti-friction material displaced in the deformation operation produced thereby it is possible to achieve a press fit of the flange bushings (6, 7) without play in the bore (4) and a mounting without play between the flange bushings and the bolt mounted therein.

2. Plain bearing according to Claim 1, characterised in that a chamfer (8) with an angle of 20 to 45° is provided in the transition region from the bushing (2) to the flange (1).

3. Plain bearing according to Claim 1, characterised in that a depression (9) which has the shape of a circular segment in cross-section is provided in the transition region from the bushing (2) to the flange (1).
